(19) **Europäisches Patentamt / European Patent Office / Office européen des brevets**

(11) **EP 4 403 962 B1**

(12) **EUROPEAN PATENT SPECIFICATION**

(45) Date of publication and mention
of the grant of the patent:
**08.10.2025 Bulletin 2025/41**

(21) Application number: **23305070.7**

(22) Date of filing: **20.01.2023**

(51) International Patent Classification (IPC):
**G01V 3/04** *(2006.01)*

(52) Cooperative Patent Classification (CPC):
**G01V 3/04**

(54) **GROUND EXPLORATION SYSTEM AND METHOD**

BODENEXPLORATIONSSYSTEM UND -VERFAHREN

SYSTÈME ET PROCÉDÉ D'EXPLORATION DU SOL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**24.07.2024 Bulletin 2024/30**

(73) Proprietors:
• **Iris Instruments**
**45100 Orléans (FR)**
• **BRGM**
**45060 Orleans Cedex 2 (FR)**

(72) Inventors:
• **GANCE, Julien**
**45240 La Ferté Saint-Aubin (FR)**
• **LEITE, Orlando**
**45520 Gidy (FR)**
• **DEPARIS, Jacques**
**45240 La Ferté Saint-Aubin (FR)**

(74) Representative: **Icosa**
**83 avenue Denfert-Rochereau**
**75014 Paris (FR)**

(56) References cited:
**WO-A1-03/023452      US-A- 3 967 190**
**US-B1- 6 265 881**

## Description

## FIELD OF THE DISCLOSURE

The present disclosure relates to ground exploration system and method for determining at least one electrical property of a ground structure.

## BACKGROUND OF THE DISCLOSURE

Characteristics of a ground structure, including a ground surface and a subsoil, can be apprehended by the study of electrical properties, especially an electrical resistivity and a chargeability, of formations present in the ground structure.

Such information on electrical properties of the ground structure can be used in many industrial processes requiring an identification of anomalies in at least one of the electrical resistivity and the chargeability present in the ground structure, such as for searching underground water, cavities, geothermal energy or for mineral exploration.

These electrical properties are, among other things, a function of a nature of components of the ground structure, their permeability, a diameter of their pores, the conductivity of imbibition fluids and their metal sulfide content.

To obtain such information, a known method disclosed in US3967190 consists in measuring an induced polarization of the ground structure by a ground exploration system comprising:

- a generator configured to inject an injection current into the ground structure via at least one pair of injection electrodes inserted into the ground structure,
- a processing unit configured to measure a ground tension via at least one pair of measurement electrodes inserted into the ground structure.

In the last decades, the injection current injected by the generator had generally a 50% duty cycle. Such injection current present successive pulses each having a non-zero intensity and a pulse duration (generally some seconds), the pulses being separated from each other by cut-off portions having each a zero intensity and a same duration as the pulse duration. During the cut-off portions, the ground tension which progressively goes back to zero is measured. Such decrease in ground tension is normalized by a primary voltage measured at the end of the pulse duration so that the measurement of induced polarization does not depend on the injection current. This normalized measurement is called decay curve which is generally averaged on 20 induced polarization windows programmed by the user. An area under this decay curve is computed and called chargeability.

It has been shown that induced polarization could also be measured during the "on-time", namely during pulse duration, providing a good stability of the injection. In this condition, the induced polarization can be measured with the injection of a 100% duty cycle injection current, in which the successive pulse succeed each other directly without portions of zero intensity. Two main advantages of an implementation of such injection current with respect to an implementation of a 50% duty cycle injection current are:

- for the same number of stack in the injection electrodes, the acquisition time is divided by two, and
- an amplitude of the decay curve is multiplied by two as the ground tension measured is linked to a variation of two times the injection current in 100% duty cycle mode, compared to a variation of the injection current in 50% duty cycle.

Ground exploration system implementing induced polarization with generators operating with 100% duty cycle injection current are known. The generator of these known ground exploration systems have generally a maximal power of 250 W, a maximal voltage of 800 V and a maximal injection current of 2.5 A. However, such maximal power and voltage do not allow these ground exploration systems to be used for induced polarization measurements at depth higher than 100 m to 150 m.

For higher depth of investigation, i.e. superior to 150 m, high power generators are to be used. Their maximal specifications are much higher, such as 3 kW to 12 kW as power, 3 kV to 5 kV as voltage and 10 A to 20 A as injection current, so that the ground tension measured during induced polarization measurements can get out of noise level at high depth. However, most of these high power generators are non current-regulated. A non current-regulated generator imposes either a constant or variable tension between the injection electrodes. The injection current injected into the ground structure is therefore only driven by the contact resistance of the injection electrodes with the ground structure. This contact resistance is known to be unstable and always lead to unstable current injection, i.e. the current injected changes over time.

Even if some of these generators are current-regulated, the injection current is not always stable enough to correctly measure induced polarization with the 100% duty cycle form. Besides, regulating accurately the injection current on such high power generator, such as 0.1% of variation on the injection current for an accuracy on the chargeability of 1 mV/V, is much more difficult than on low power generators, having a maximal power of 250 W, and would ask to redesign most of the existing high power generators.

The invention aims at providing ground exploration system and method that enable a fast and accurate determination of one or several electrical properties of a ground structure.

## SUMMARY

To that end, according to a first aspect, the invention proposes a ground exploration system for determining at least one electrical property of a ground structure, the ground exploration system comprising:

- a generator configured to inject an injection current $I_i$(t) over time t that is non current-regulated and has a 100% duty cycle form, into the ground structure, the injection current $I_i$(t) presenting successive pulses of opposed polarity, each pulse having a pulse duration, and

- a processing unit configured to measure a corrected induced polarization of the ground structure during at least one pulse duration by:

    o measuring a ground tension $V_g$(t) over time t,
    o registering the injection current $I_i$(t) over time t,
    o applying a transfer function TF to the injection current $I_i$(t) and to the ground tension $V_g$(t) and compute an impedance function IF such as

$$IF = \frac{TF(V_g(t))}{TF(I_i(t))} \ ,$$

    o applying the transfer function TF to a square pulse of a theoretical regulated current $I_t$(t) over time t and to compute a corrected tension $V_c$(t) over time t such as $V_c$(t) = TF$^{-1}$ (IF * TF(It (t))),

    wherein the processing unit is further configured to determine the at least one electrical property based on the corrected induced polarization of the ground structure.

Thanks to the measurement of a corrected induced polarization, the invention enables the implementation of a non current-regulated and 100% duty cycle injection current to determine the electrical property of the ground structure in a fast and accurate manner.

The transfer function may be chosen among mathematical transforms from a time domain to a frequency domain, such as Fourier transform, Laplace transform, Hilbert transform, Z transform and a wavelet transform.

The processing unit may be configured to measure the corrected induced polarization of the ground structure during several pulse durations, preferably at least five pulse durations.

The processing unit may be configured to determine an electrical resistivity p of the ground structure as electrical property where $\rho = K \dfrac{V_c(t)}{I_i(t)}$ with K, geometric factor of the ground exploration system.

The processing unit may be configured to determine a chargeability C of the ground structure as electrical property where

$$C = \frac{1}{V_{c\_max} \Delta t} \int_{t_0}^{t_0 + \Delta t} V_c(t) \ dt$$ with $V_{c\_max}$, a maximum of the corrected tension $V_c$(t),

$t_0$, a time at which a change in polarity of the injection current occurs,
$\Delta t$ a time period following $t_0$.

The generator may comprise at least one pair of injection electrodes configured to be inserted into the ground structure, and the processing unit may comprise at least one pair of measurement electrodes configured to be inserted into the ground structure.

According to a second aspect, the invention proposes a ground exploration method for determining at least one electrical property of a ground structure, the ground exploration method comprising:

- injecting an injection current $I_i$(t) over time t that is non current-regulated and has a 100% duty cycle form into the ground structure, the injection current $I_i$(t) presenting successive pulses of opposed polarity, each pulse having a pulse duration, and
- measuring a corrected induced polarization of the ground structure during at least one pulse duration by:

    o measuring a ground tension $V_g$(t) over time t,
    o registering the injection current $I_i$(t) over time t,
    o applying a transfer function TF to the injection current $I_i$(t) and to the ground tension $V_g$(t) and compute an impedance function IF such as

$$IF = \frac{TF(V_g(t))}{TF(I_i(t))} \ ,$$

    o applying the transfer function TF to a square pulse of a theoretical regulated current $I_t$(t) over time t and to compute a corrected tension $V_c$(t) over time t such as $V_c$(t) = TF$^{-1}$ (IF * TF(It (t))),

- determining the at least one electrical property based on the corrected induced polarization of the ground structure.

## BRIEF DESCRIPTION OF THE DRAWINGS

Other objects and advantages of the invention will emerge from the following description of an embodiment made in relation with the accompanying drawings, in which:

- figure 1 is a ground exploration system comprising a generator configured to inject an injection current in a ground structure, and a processing unit configured to measure a corrected induced polarization on which basis at least one electrical property of the ground structure may be determined,
- figure 2 is a graph illustrating an evolution of the injection current over time injected in the ground structure with the generator of the ground exploration system of figure 1, and an evolution of the ground tension over time measured with the processing unit of the ground exploration system of figure 1, the injection current being non current-regulated and having a 100% duty cycle form,

- figure 3 is an ordinogram illustrating steps of a ground exploration method for determining at least one electrical property of a ground structure, the method implementing the ground exploration system of figure 1,

- figure 4 illustrates 3 decays curves acquired in 100% duty cycle mode, one with a current-regulated 100% duty cycle current (full line) and two others with non current-regulated current (dotted line and dashed line),

- figure 5 shows the same corrected decay curves computed with the procedure described in the invention.

## DETAILED DESCRIPTION

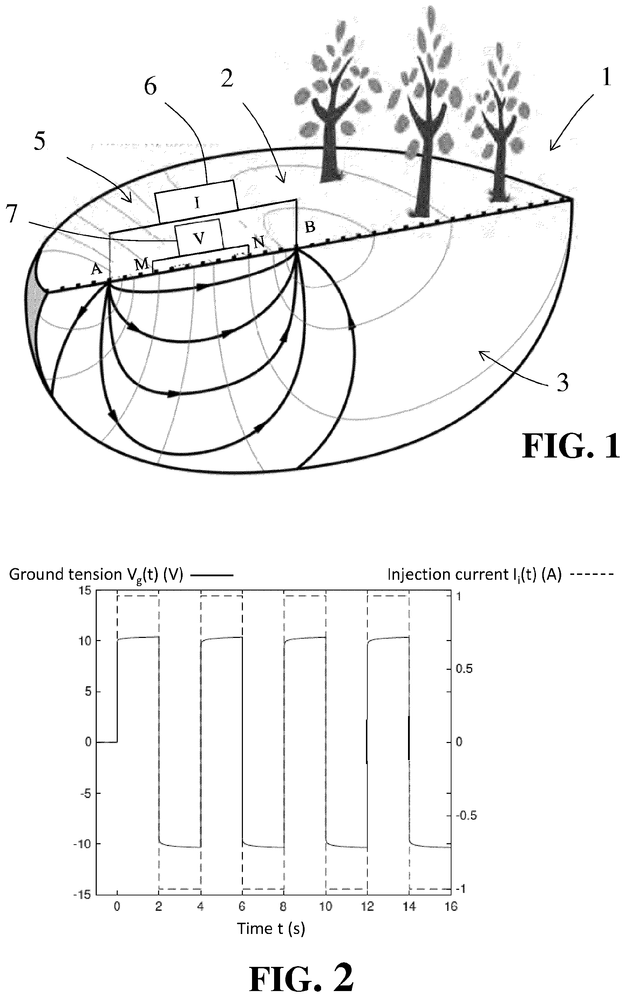

Figure 1 illustrates a ground exploration system 5 for determining one or several electrical properties of a ground structure 1. Such ground exploration system 5 finds particular applications in fields where a composition of the ground structure 1, especially in view of a construction of its ground surface 2 or an exploitation of its subsoil 3, is to be known. Indeed, such composition can be determined based on its electrical properties, such as electrical resistivity and chargeability.

The ground exploration system 5 comprises a generator 6 having one or several pairs of injection electrodes A, B configured to be inserted into the ground structure 1 and to inject an injection current $I_i(t)$ over time t into the ground structure 1.

According to the invention, the generator 6 can be a non current-regulated current generator operating at a 100% duty cycle. As shown in figure 2, the injection current $I_i(t)$ hence presents successive pulses of opposed polarity succeeding directly to each other, namely without portions of zero intensity over a time period. Each pulse has a pulse duration.

The ground exploration system 5 also comprises a processing unit 7 configured to measure a corrected induced polarization of the ground structure 1 during one or several of the pulse durations, preferably at least five pulse durations. The processing unit 7 comprises one or several pairs of measurement electrodes M, N configured to be inserted into the ground structure and to measure a ground tension $V_g(t)$ over time t. The processing unit 7 may comprise a receptor to which the measurement electrodes M, N belong and configured to perform the measurement of the ground tension $V_g(t)$.

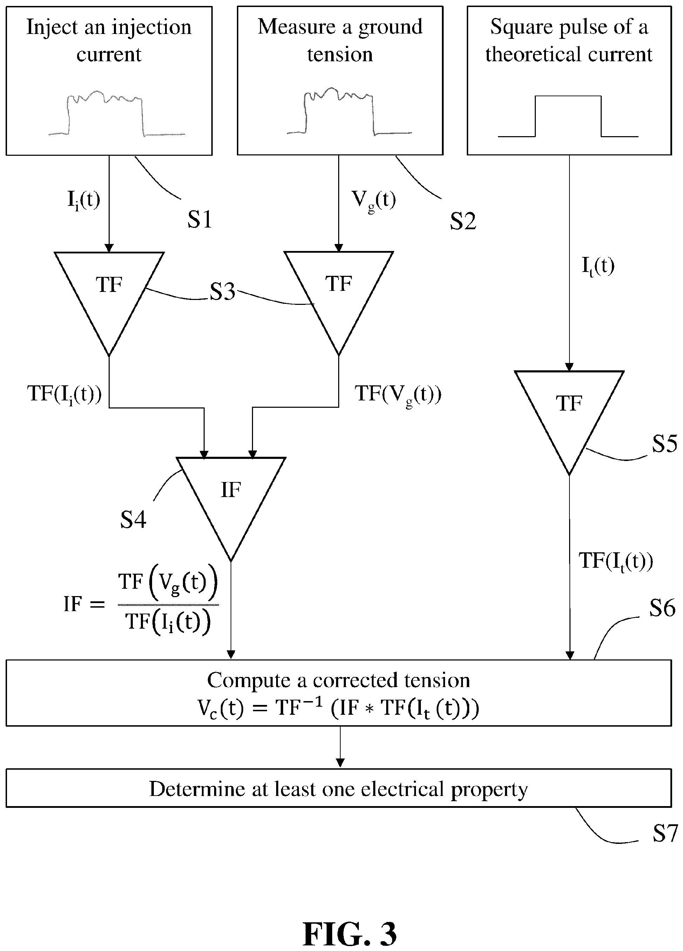

Measurement of the corrected induced polarization is performed by the processing unit 7 according to the ground exploration method represented on figure 3 and detailed below.

At a step S1, injection current $I_i(t)$ is injected into the ground structure 1 by the generator 6 and, because of its non-regulated nature, registered by the processing unit 7. The processing unit 7 may comprise an emitter to perform such registration, the emitter being part of the generator 6 or independent therefrom. In the later case, the emitter may be separated from the receptor or integrated therewith in the processing unit 7 forming a single assembly.

At a step S2, the ground tension is measured by the receptor of the processing unit 7.

At step S3, a processor of the processing unit 7 applies a transfer function TF to both the injection current $I_i(t)$ and to the ground tension $V_g(t)$. The processor may be part of one of the emitter and the receptor or part of both the emitter and the receptor, for example integrated therewith in the single assembly of the processing unit. Alternatively, the processor may be independent the emitter and the receptor. In a particular example, the transfer function is a Fourier transform. The invention is however not limited to such transfer function. Other transfer function could be implemented, especially but not exclusively chosen among other mathematical transforms from a time domain to a frequency domain than the Fourier transform, such as Laplace transform, Hilbert transform, Z transform and a wavelet transform.

At step S4, an impedance function IF is computed by the processor based on the Fourier transforms of the injection current $I_i(t)$ and to the ground tension $V_g(t)$.

The impedance function hence reads $IF = \dfrac{TF(V_g(t))}{TF(I_i(t))}$.

Besides, a step S5 provides application by the processor of the transfer function TF, especially the Fourier transform in the disclosed example, to a square pulse of a theoretical regulated current $I_t(t)$ over time t.

At step S6, a corrected tension $V_c(t)$ over time t corresponding to the corrected induced polarization is computed by the processor by $V_c(t) = TF^{-1}(IF * TF(I_t(t)))$.

Based on the corrected induced polarization of the ground structure 1, the electrical properties may be determined by the processor at step S7. The electrical properties may comprise at least one of:

- the electrical resistivity p of the ground structure 1, where $\rho = K\,\dfrac{V_c(t)}{I_i(t)}$ with K, geometric factor of the ground exploration system 5 determined based on the position of the electrodes A, B, M and N, and

- the chargeability C of the ground structure where $C = \dfrac{1}{V_{c\_max}\,\Delta t}\int_{t_0}^{t_0+\Delta t} V_c(t)\,dt$ with $V_{c\_max}$, a maximum of the corrected tension $V_c(t)$,

$t_0$, a time at which a change in polarity of the injection current occurs,

$\Delta t$ a time period following $t_0$.

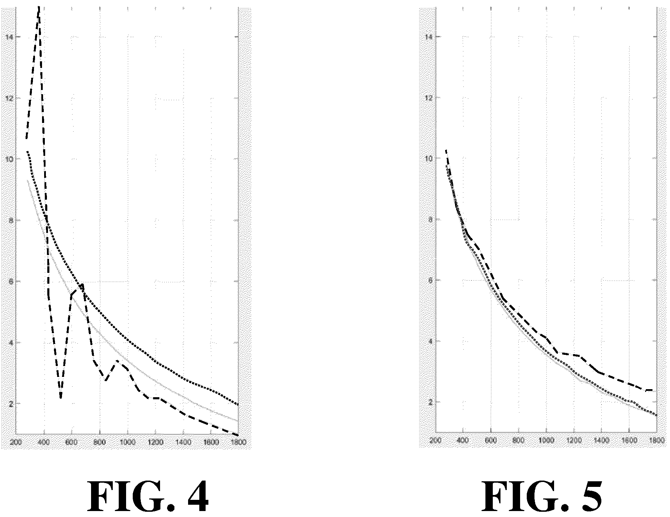

Figures 4 and 5 illustrate different decay curves acquired on the same quadrupole, namely the same pairs of injection electrodes and of measurement electrodes, to have identical ground chargeability. One is measured with a current-regulated 100% duty cycle injection current (full line) and two others with 100% duty-cycle non current-regulated injection currents (dotted line and dashed line). In figure 4, because the three injected currents are not perfect 100% duty cycle crenels (non current-regulated), the three decay curves are different. In figure 5, by applying the correction procedure, one is able to recompute two decay curves overlapping with the reference one (full line) giving globally the same global chargeability.

## Claims

1. A ground exploration system (5) for determining at least one electrical property of a ground structure (1), the ground exploration system (5) comprising:

    - a generator (6) configured to inject an injection current $I_i(t)$ over time t that is non current-regulated and has a 100% duty cycle form into the ground structure (1), the injection current $I_i(t)$ presenting successive pulses of opposed polarity, each pulse having a pulse duration, and **characterized in that** it further comprises
    - a processing unit (7) configured to measure a corrected induced polarization of the ground structure (1) during at least one pulse duration by:

        ○ measuring a ground tension $V_g(t)$ over time t,
        ○ registering the injection current $I_i(t)$ over time t,
        ○ applying a transfer function TF to the injection current $I_i(t)$ and to the ground tension $V_g(t)$ and compute an impedance function IF such as $IF = \dfrac{TF(V_g(t))}{TF(I_i(t))}$ ,
        o applying the transfer function TF to a square pulse of a theoretical regulated current $I_t(t)$ over time t and to compute a corrected tension $V_c(t)$ over time t such as $V_c(t) = TF^{-1}(IF * TF(It(t)))$,

    wherein the processing unit (7) is further configured to determine the at least one electrical property based on the corrected induced polarization of the ground structure (1).

2. The ground exploration system (5) according to claim **1,** wherein the transfer function is chosen among mathematical transforms from a time domain to a frequency domain, such as Fourier transform, Laplace transform, Hilbert transform, Z transform and a wavelet transform.

3. The ground exploration system (5) according to any of claims **1** and **2,** wherein the processing unit (7) is configured to measure the corrected induced polarization of the ground structure (1) during several pulse durations, preferably at least five pulse durations.

4. The ground exploration system (5) according to any of claims **1** to **3,** wherein the processing unit (7) is configured to determine an electrical resistivity p of the ground structure (1) as electrical property where

    $$\rho = K \, \frac{V_c(t)}{I_i(t)} \text{ with K, geometric factor of the ground}$$

    exploration system (5).

5. The ground exploration system (5) according to any of claims **1** to **4,** wherein the processing unit (7) is configured to determine a chargeability C of the ground structure (1) as electrical property where

    $$C = \frac{1}{V_{c\_max} \; \Delta t} \int_{t_0}^{t_0 + \Delta t} V_c(t) \qquad dt \qquad \text{with}$$

    $V_{c\_max}$, a maximum of the corrected tension $V_c(t)$,
    $t_0$, a time at which a change in polarity of the injection current occurs,
    $\Delta t$ a time period following $t_0$.

6. The ground exploration system (5) according to any of claims **1** to **5,** wherein the generator (6) comprises at least one pair of injection electrodes (A, B) configured to be inserted into the ground structure (1), and the processing unit (7) comprises at least one pair of measurement electrodes (M, N) configured to be inserted into the ground structure (1).

7. A ground exploration method for determining at least one electrical property of a ground structure (1), the ground exploration method comprising:

    - Injecting an injection current $I_i(t)$ over time t that is non current-regulated and has a 100% duty cycle form into the ground structure, the injection current $I_i(t)$ presenting successive pulses of opposed polarity, each pulse having a pulse duration, and **characterized in that** it further comprises
    - measuring a corrected induced polarization of the ground structure (1) during at least one pulse duration by:

        o measuring a ground tension $V_g(t)$ over time t,
        o registering the injection current $I_i(t)$ over

time t,

o applying a transfer function TF to the injection current $I_i(t)$ and to the ground tension $V_g(t)$ and compute an impedance function IF such as $IF = \dfrac{TF(V_g(t))}{TF(I_i(t))}$ ,

o applying the transfer function TF to a square pulse of a theoretical regulated current $I_t(t)$ over time t and to compute a corrected tension $V_c(t)$ over time t such as $V_c(t) = TF^{-1}(IF * TF(It(t)))$,

- determining the at least one electrical property based on the corrected induced polarization of the ground structure (1).

8. The ground exploration method according to claim 7, wherein the transfer function is chosen among mathematical transforms from a time domain to a frequency domain, such as Fourier transform, Laplace transform, Hilbert transform, Z transform and a wavelet transform.

9. The ground exploration method according to any of claims **7** and **8,** wherein the corrected induced polarization of the ground structure (1) is measured during several pulse durations, preferably at least five pulse durations.

10. The ground exploration method according to any of claims **7** to **9,** wherein an electrical resistivity p of the ground structure (1) is determined as electrical property where $\rho = K\,\dfrac{V_c(t)}{I_i(t)}$ with K, geometric factor of the ground exploration system.

11. The ground exploration method according to any of claims **7** to **10,** wherein a chargeability C of the ground structure (1) is determined as electrical property where $C = \dfrac{1}{V_{c\_max}\,\Delta t}\int_{t_0}^{t_0+\Delta t} V_c(t)\;dt$ with

$V_{c\_max}$, a maximum of the corrected tension $V_c(t)$,
$t_0$, a time at which a change in polarity of the injection current occurs,
$\Delta t$ a time period following $t_0$.

**Patentansprüche**

1. Bodenexplorationssystem (5) zum Bestimmen mindestens einer elektrischen Eigenschaft einer Bodenstruktur (1), wobei das Bodenexplorationssystem (5) Folgendes umfasst:

- einen Generator (6), der so eingerichtet ist, dass er einen Injektionsstrom $I_i(t)$ über die Zeit t in die Bodenstruktur (1) einspeist, der nicht stromgeregelt ist und eine Tastverhältnisform von 100 % aufweist, wobei der Injektionsstrom $I_i(t)$ aufeinanderfolgende Impulse entgegengesetzter Polarität aufweist, wobei jeder Impuls eine Impulsdauer aufweist, und **dadurch gekennzeichnet, dass** es ferner umfasst

- eine Verarbeitungseinheit (7), die so eingerichtet ist, dass sie eine korrigierte induzierte Polarisation der Bodenstruktur (1) während mindestens einer Impulsdauer durch Folgendes misst:

o Messen einer Bodenspannung $V_g(t)$ über die Zeit t,
o Erfassen des Injektionsstroms $I_i(t)$ über die Zeit t,
o Anwenden einer Übertragungsfunktion TF auf den Injektionsstrom $I_i(t)$ und auf die Bodenspannung $V_g(t)$ und Berechnen einer Impedanzantwort IF, wie z. B.

$IF = \dfrac{TF(V_g(t))}{TF(I_i(t))}$ ,

o Anwenden der Übertragungsfunktion TF auf einen Rechteckimpulsform eines theoretisch geregelten Stroms $I_t(t)$ über die Zeit t und Berechnen einer korrigierten Spannung $V_c(t)$ über die Zeit t, wie z. B. $V_c(t) = TF^{-1}(IF * TF(It(t)))$,

wobei die Verarbeitungseinheit (7) ferner so eingerichtet ist, dass sie die mindestens eine elektrische Eigenschaft basierend auf der korrigierten induzierten Polarisation der Bodenstruktur (1) bestimmt.

2. Bodenexplorationssystem (5) nach Anspruch **1,** wobei die Übertragungsfunktion aus mathematischen Transformationen von einer Zeitdomäne in eine Frequenzdomäne, wie z. B. Fourier-Transformation, Laplace-Transformation, Hilbert-Transformation, Z-Transformation und Wavelet-Transformation, ausgewählt ist.

3. Bodenexplorationssystem (5) nach einem der Ansprüche **1** und **2,** wobei die Verarbeitungseinheit (7) so eingerichtet ist, dass sie die korrigierte induzierte Polarisation der Bodenstruktur (1) während mehrerer Impulsdauern, vorzugsweise mindestens fünf Impulsdauern, misst.

4. Bodenexplorationssystem (5) nach einem der Ansprüche **1** bis **3,** wobei die Verarbeitungseinheit (7) so eingerichtet ist, dass sie einen elektrischen Widerstand p der Bodenstruktur (1) als elektrische Eigenschaft bestimmt, wobei $\rho = K\,\dfrac{V_c(t)}{I_i(t)}$ mit K

der geometrische Faktor des Bodenexplorationssystems (5) ist.

5. Bodenexplorationssystem (5) nach einem der Ansprüche **1** bis **4,** wobei die Verarbeitungseinheit (7) so eingerichtet ist, dass sie eine Aufladbarkeit C der Bodenstruktur (1) als elektrische Eigenschaft bestimmt, wobei $C = \frac{1}{V_{c\_max} \, \Delta t} \int_{t_o}^{t_o + \Delta t} V_C(t)$ $dt$ mit

   $V_{c\_max}$ ein Maximum der korrigierten Spannung $V_c(t)$ ist,
   $t_0$ ein Zeitpunkt ist, zu dem eine Polaritätsände-rung des Injektionsstroms eintritt,
   $\Delta t$ eine Zeitspanne nach $t_0$ ist.

6. Bodenexplorationssystem (5) nach einem der Ansprüche **1** bis **5,** wobei der Generator (6) mindestens ein Paar Injektionselektroden (A, B) umfasst, das so eingerichtet ist, dass es in die Bodenstruktur (1) eingesetzt werden soll, und die Verarbeitungseinheit (7) mindestens ein Paar Messelektroden (M, N) umfasst, das so eingerichtet ist, dass es in die Bodenstruktur (1) eingesetzt werden soll.

7. Bodenexplorationsverfahren zum Bestimmen mindestens einer elektrischen Eigenschaft einer Bodenstruktur (1), wobei das Bodenexplorationsverfahren Folgendes umfasst:

   - Einspeisen eines Injektionsstroms $I_i$(t) über die Zeit t, der nicht stromgeregelt ist und eine Tastverhältnisform von 100% aufweist, in die Boden-struktur, wobei der Injektionsstrom $I_i$(t) aufeinan-derfolgende Impulse entgegengesetzter Polari-tät aufweist, wobei jeder Impuls eine Impulsdauer aufweist, und **dadurch gekennzeichnet, dass** es ferner Folgendes umfasst
   - Messen einer korrigierten induzierten Polarisation der Bodenstruktur (1) während mindestens einer Impulsdauer durch:

      ∘ Messen einer Bodenspannung $V_g$(t) über die Zeit t,
      ∘ Erfassen des Injektionsstroms $I_i$(t) über die Zeit t,
      ∘ Anwenden einer Übertragungsfunktion TF auf den Injektionsstrom $I_i$(t) und auf die Bodenspannung $V_g$(t) und Berechnen einer Impedanzantwort IF, wie z. B. IF = $\dfrac{TF(V_g(t))}{TF(I_i(t))}$ ,
      ∘ Anwenden der Übertragungsfunktion TF auf einen Rechteckimpulsform eines theo-retisch geregelten Stroms $I_t$(t) über die Zeit t und Berechnen einer korrigierten Spannung $V_c$(t) über die Zeit t, wie z. B. $V_c$(t) = $TF^{-1}$ (IF * TF($I_t$ (t))),
      ∘ Bestimmen der mindestens einen elektrischen Eigenschaft basierend auf der kor-rigierten induzierten Polarisation der Bo-denstruktur (1).

8. Bodenexplorationsverfahren nach Anspruch **7,** wobei die Übertragungsfunktion aus mathematischen Transformationen von einer Zeitdomäne in eine Frequenzdomäne, wie z. B. Fourier-Transformation, Laplace-Transformation, Hilbert-Transformation, Z-Transformation und Wavelet-Transformation, ausgewählt ist.

9. Bodenexplorationsverfahren nach einem der Ansprüche **7** und **8,** wobei die korrigierte induzierte Polarisation der Bodenstruktur (1) während mehrerer Impulsdauern, vorzugsweise mindestens fünf Impulsdauern, gemessen wird.

10. Bodenexplorationsverfahren nach einem der Ansprüche **7** bis **9,** wobei ein elektrischer Widerstand p der Bodenstruktur (1) als elektrische Eigen-schaft bestimmt wird, wobei $\rho = K \, \dfrac{V_C(t)}{I_i(t)}$ mit K der geometrische Faktor des Bodenexplorationssystems ist.

11. Bodenexplorationsverfahren nach einem der Ansprüche **7** bis **10,** wobei eine Aufladbarkeit C der Bodenstruktur (1) als elektrische Eigenschaft bestimmt wird, wobei

   $$C = \frac{1}{V_{c\_max} \, \Delta t} \int_{t_o}^{t_o + \Delta t} V_C(t) dt \qquad \text{mit}$$

   $V_{c\_max}$ ein Maximum der korrigierten Spannung $V_c(t)$ ist,
   $t_0$ ein Zeitpunkt ist, zu dem eine Polaritätsände-rung des Injektionsstroms eintritt,
   $\Delta t$ eine Zeitspanne nach $t_0$ ist.

**Revendications**

1. Système d'exploration du sol (5) pour déterminer au moins une propriété électrique d'une structure de sol (1), le système d'exploration du sol (5) comprenant :

   - un générateur (6) configuré pour injecter dans la structure de sol (1) un courant d'injection $I_i$(t) en fonction du temps t, lequel n'est pas régulé en courant et présente une forme à rapport cyclique de 100%, le courant d'injection $I_i$(t) présentant des impulsions successives de polarité opposée, chaque impulsion ayant une durée d'impulsion, et

- une unité de traitement (7) configurée pour mesurer une polarisation induite corrigée de la structure de sol (1) pendant au moins une durée d'impulsion en :

  o mesurant une tension de sol $V_g(t)$ en fonction du temps t,
  o enregistrant le courant d'injection $I_i(t)$ en fonction du temps t,
  o appliquant une fonction de transfert TF au courant d'injection $I_i(t)$ et à la tension de sol $V_g(t)$, et en calculant une fonction d'impédance IF telle que $IF = \dfrac{TF(V_g(t))}{TF(I_i(t))}$,
  o appliquant la fonction de transfert TF à une impulsion carrée d'un courant théorique régulé $I_t(t)$ en fonction du temps t, et en calculant une tension corrigée $V_c(t)$ en fonction du temps t, telle que $V_c(t) = TF^{-1}(IF * TF(It(t)))$,

  l'unité de traitement (7) étant en outre configurée pour déterminer l'au moins une propriété électrique sur la base de la polarisation induite corrigée de la structure de sol (1).

2. Système d'exploration du sol (5) selon la revendication 1, dans lequel la fonction de transfert est choisie parmi les transformées mathématiques du domaine temporel vers le domaine fréquentiel, telles que la transformée de Fourier, la transformée de Laplace, la transformée de Hilbert, la transformée en Z et une transformée en ondelettes.

3. Système d'exploration du sol (5) selon l'une quelconque des revendications 1 ou 2, dans lequel l'unité de traitement (7) est configurée pour mesurer la polarisation induite corrigée de la structure de sol (1) pendant plusieurs durées d'impulsion, de préférence au moins cinq durées d'impulsion.

4. Système d'exploration du sol (5) selon l'une quelconque des revendications 1 à 3, dans lequel l'unité de traitement (7) est configurée pour déterminer une résistivité électrique p de la structure de sol (1) comme propriété électrique, où $\rho = K\,\dfrac{V_c(t)}{I_i(t)}$ avec K, facteur géométrique du système d'exploration du sol (5).

5. Système d'exploration du sol (5) selon l'une quelconque des revendications 1 à 4, dans lequel l'unité de traitement (7) est configurée pour déterminer une chargeabilité C de la structure de sol (1) comme propriété électrique, où $C = \dfrac{1}{V_{c\_max}\,\Delta t}\int_{t_0}^{t_0+\Delta t} V_c(t)\,dt$ avec :

$V_{c\_max}$, un maximum de la tension corrigée $V_c(t)$,
$t_0$, un instant où un changement de polarité du courant d'injection se produit,
$\Delta t$, une durée après $t_0$.

6. Système d'exploration du sol (5) selon l'une quelconque des revendications 1 à 5, dans lequel le générateur (6) comprend au moins une paire d'électrodes d'injection (A, B) configurées pour être insérées dans la structure de sol (1), et l'unité de traitement (7) comprend au moins une paire d'électrodes de mesure (M, N) configurées pour être insérées dans la structure de sol (1).

7. Procédé d'exploration du sol pour déterminer au moins une propriété électrique d'une structure de sol (1), le procédé comprenant :

   - injecter dans la structure de sol un courant d'injection $I_i(t)$ en fonction du temps t, lequel n'est pas régulé en courant et présente une forme à rapport cyclique de 100%, le courant d'injection $I_i(t)$ présentant des impulsions successives de polarité opposée, chaque impulsion ayant une durée d'impulsion, et
   - mesurer une polarisation induite corrigée de la structure de sol (1) pendant au moins une durée d'impulsion, en :

     ◦ mesurant une tension de sol $V_g(t)$ en fonction du temps t,
     ◦ enregistrant le courant d'injection $I_i(t)$ en fonction du temps t,
     ◦ appliquant une fonction de transfert TF au courant d'injection $I_i(t)$ et à la tension de sol $V_g(t)$, et en calculant une fonction d'impédance IF telle que $IF = \dfrac{TF(V_g(t))}{TF(I_i(t))}$,
     o appliquant la fonction de transfert TF à une impulsion carrée d'un courant théorique régulé $I_t(t)$ en fonction du temps t, et en calculant une tension corrigée $V_c(t)$ en fonction du temps t, telle que $V_c(t) = TF^{-1}(IF * TF(It(t)))$,
     o déterminant au moins une propriété électrique sur la base de la polarisation induite corrigée de la structure de sol (1).

8. Procédé d'exploration du sol selon la revendication 7, dans lequel la fonction de transfert est choisie parmi les transformées mathématiques du domaine temporel vers le domaine fréquentiel, telles que la transformée de Fourier, la transformée de Laplace, la transformée de Hilbert, la transformée en Z et une transformée en ondelettes.

**9.** Procédé d'exploration du sol selon l'une quelconque des revendications 7 ou 8, dans lequel la polarisation induite corrigée de la structure de sol (1) est mesurée pendant plusieurs durées d'impulsion, de préférence au moins cinq durées d'impulsion.

**10.** Procédé d'exploration du sol selon l'une quelconque des revendications 7 à 9, dans lequel une résistivité électrique p de la structure de sol (1) est déterminée comme propriété électrique, où $\rho = K \dfrac{V_c(t)}{I_i(t)}$ avec K, facteur géométrique du système d'exploration du sol.

**11.** Procédé d'exploration du sol selon l'une quelconque des revendications 7 à 10, dans lequel une chargeabilité C de la structure de sol (1) est déterminée comme propriété électrique, où

$$C = \frac{1}{V_{c\_max} \; \Delta t} \int_{t_0}^{t_0 + \Delta t} V_c(t) dt \qquad \text{avec} \qquad :$$

$V_{c\_max}$, un maximum de la tension corrigée $V_c(t)$,
$t_0$, un instant où un changement de polarité du courant d'injection se produit,
$\Delta t$, une durée après t0.

**FIG. 1**

Ground tension $V_g(t)$ (V) ——    Injection current $I_i(t)$ (A) ------

Time t (s)

**FIG. 2**

FIG. 3

**FIG. 4**

**FIG. 5**

**EP 4 403 962 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3967190 A